(19) Europäisches Patentamt / European Patent Office / Office européen des brevets

(11) **EP 2 884 059 B1**

(12) **EUROPEAN PATENT SPECIFICATION**

(45) Date of publication and mention
of the grant of the patent:
**21.06.2017 Bulletin 2017/25**

(51) Int Cl.:
*F01K 23/10* (2006.01)    *F22B 1/18* (2006.01)
*F22B 35/00* (2006.01)

(21) Application number: **13196771.3**

(22) Date of filing: **11.12.2013**

(54) **Multistage HRSG control in combined cycle unit**

Mehrstufige Abhitzekessel-Steuerung in einem Kombikraftwerk

Commande HRSG à étages multiples dans une unité à cycle combiné

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **Honeywell spol s.r.o.
14800 Prague 4 (CZ)**

(72) Inventors:
• **BARAMOV, Lubomir
15000 Praha (CZ)**
• **BASUS, Ondrej
17000 Prague (CZ)**
• **HAVLENA, Vladimir
182 00 Czech Republic (CZ)**

(74) Representative: **Houghton, Mark Phillip
Patent Outsourcing Limited
1 King Street
Bakewell, Derbyshire DE45 1DZ (GB)**

(56) References cited:
**EP-A1- 2 034 137    US-A1- 2009 282 803
US-A1- 2011 160 979**

EP 2 884 059 B1

## Description

Technical Area

The present invention concerns a system and method for controlling multiple stages of a heat recovery steam generator. It also concerns a computer readable storage device having code to cause a controller to control multiple stages of a heat recovery steam generator.

Background

Combined cycle (CC) units consisting of gas turbines (GT) and heat recovery steam generator (HRSG) with duct firing are increasingly used in industrial energy plants as they provide significantly higher efficiency compared to the classical boiler-turbine cycle. Their importance becomes even higher after significant market and energy price changes caused by rapidly growing shale gas production. Advanced regulatory control techniques can significantly help to operate CC plants optimally. To be able to do that, mathematical models satisfactorily describing real behavior of strongly interacting individual components have been used.

EP2034137 discloses a method of operating a gas and steam turbine plant in which a transient dry operation of the evaporator circuit in a heat steam generator can be detected and avoided.

Summary

The present invention provides a method, a system and a computer readable storage device having code to cause a controller to perform a method according to the appended claims.

Brief Description of the Drawings

FIG. 1 is a block diagram combined cycle unit having a cascaded multiple stage heat recovery steam generator with parallel stage heat input based model control according to an example embodiment.

FIG. 2 is a block diagram illustrating further detail of a duct burner with a multiple stage heat recovery steam generator according to an example embodiment.

FIG. 3 is a block diagram representation of heat transfer between stages of a multiple stage heat recovery steam generator according to an example embodiment.

FIG. 4 is a graphical representation of heat distribution in a multiple stage heat recovery steam generator according to an example embodiment.

FIG. 5 is a graphical representation of a parallel heat recovery steam generator according to an example embodiment.

FIG. 6 is a graph illustrating efficiency versus heat exhaust for multiple stages of a heat recovery steam generator according to an example embodiment.

FIGs. 7A and 7B are graphs illustrating estimated parameters for parallel and prior models according to an example embodiment.

FIGs. 8A and 8B illustrate residuals of a parallel model for parameters estimated and fitted to a partial efficiencies model according to an example embodiment.

FIG. 9 is table illustrating a statistical evaluation of residuals according to an example embodiment.

FIG. 10 is a block diagram of a computer system to implement methods and a controller according to an example embodiment.

Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

A method establishes proper mathematical models of individual stages in a multistage heat recovery steam generator (HRSG) used for control. In contrast to usual practice, where efficiency of a boiler (or a HRSG stage) is parameterized in the models by steam flow of the particular component, various embodiments parameterize by overall heat flow at the inlet to the HRSG for all individual stages. This new approach provides better and more stable control models. Moreover, the models provide a convenient framework for direct physical interpretation and examination of contributions of individual components to overall operation. The new model or representation of HRSG is in terms of non-interacting non-linear scalar-valued functions sharing the same input. Thus possible model uncertainty is not propagated to the downstream stages. In contrast, the traditional representation based on partial efficiencies uses a cascaded representation where the output heat flows from a stage depend both on the heat input flow as well as on the output flows of stages upstream.

Static unit models are subject to changes due to environmental changes as well as component degradation. In the case of HRSG, efficiency loss may occur due to heat exchanger fouling, variations in feed-water temperature, etc. It is useful to adapt the models by including multiplicative factors modifying slightly models of individual stages. The multiplicative factor can capture these process changes and can be estimated on-line from measured process data.

A parallel representation simplifies identification of the HRSG steady-state model, its on-line adaptation as well as its integration to the overall process optimizer optimizing the overall economy of the power utility, using ELA (Economic Load Allocation). In further embodiments, other suitable optimizers may be utilized.

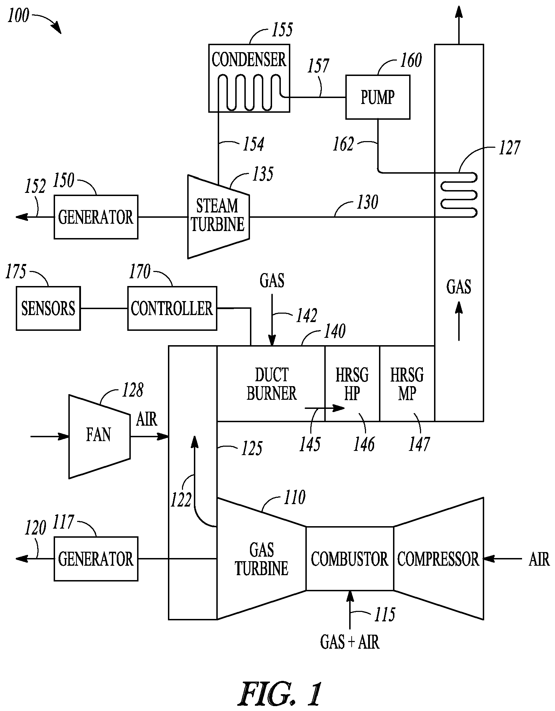

FIG. 1 is a block diagram of a combined cycle system 100 utilizing a heat recovery steam generator using heat flow at inlets for stages for modeling and control according to an example embodiment. A gas turbine 110 burns gas 115 to turn a first generator 117 and produce electricity 120. Excess heat 122 from the gas turbine is provided to a duct 125 to heat water in a heat exchanger 127 to provide steam at 130 to a steam turbine 135. An optional fan 128 may be used to provide air to the duct 125 when needed. Additional heat is provided via a duct burner 140 that burns gas 142 to produce additional heat 145 in the duct 125 to produce additional steam.

An HRSG high pressure (HP) stage 146 follows the duct burner 140, and is in turn followed by a HRSG middle pressure (MP) stage 147. In further embodiments, duct burner may include additional stages if desired. In a typical combined cycle power plant (CCCP), roughly 30 % of the heat content in the fuel is transferred to electrical energy in the generator 117, leaving the other roughly 70% as input to the HRSG stages 146 and 147 which is then transferred to steam.

The steam turbine 135 receives the steam generated in HRSG stages 146 and 147, and uses the steam to turn a second generator 150 that produces electricity 152. Together, the generation of electricity from the gas turbine and the steam turbine represent the combined cycle. Steam 154 from the steam turbine 135 is provided to a condenser 155 where it is condensed to water 157 and pumped via a pump 160 back via 162 to the heat exchanger 127 to be turned back into steam.

A controller 170 receives information from a plurality of sensors 175 and is coupled to control the duct burner 140 in accordance with a control algorithm utilizing parameters describing heat flow at each stage input for the stages of system 100 that generate electricity from steam

In one embodiment, the sensors 175 are coupled to obtain information about the temperature and corresponding heat provided at various input stages of HRSG 146 and 147, such as the waste heat, and heat produced by duct firing. In some embodiments not all measurements at all inputs are provided. In some embodiments, sensors may be positioned both in the flue gas channel (leads to indirect efficiency calculation method) and in the steam channel (leads to direct efficiency calculation method) to provide data representative of heat input to each stage. Either way, they help us build and maintain the mathematical models needed for better control. Further sensors may be used to sense the amount of steam produced at various positions in the system 100 to control various aspects of system 100.

In one example embodiment, a combined cycle unit may consist of several gas turbines (GTs) and one or more HRSG units. The controller may be used to optimize the load allocated to system 100 against the other generators available (other boilers/turbines and units) to optimize the overall steam plant performance (economic load allocation).

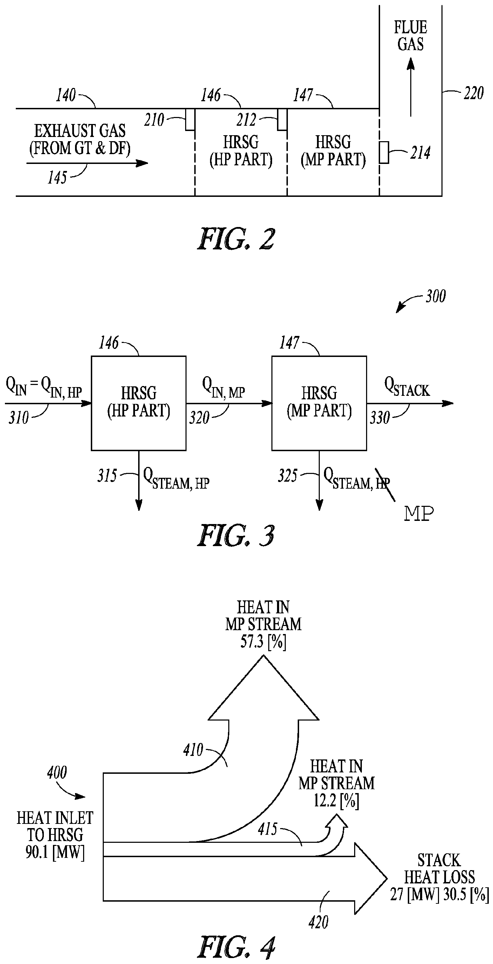

FIG. 2 provides further detail of the duct burner 140 with HRSG 146 and HRSG 147. The reference numbers are consistent with FIG. 1. Heat entering stage HRSG 146 may be measured by sensors represented at 210, and heat entering stage HRSG 147 may be measured by sensors represented at 212. In a further embodiment, sensor 214 may be positioned to measure heat entering a flue gas stage 220. Sensors 210, 212, and 214, as well as sensors measuring heat entering optional further stages are logically represented as sensors 175 in FIG. 1, providing parameter measurements to controller 170. The positioning of the sensors may be done to best capture or estimate heat input at each stage, and will likely be dependent on the particular structures used to implement each stage. One of average skill in the art will be able to appropriately place the sensors to capture accurate heat measurements.

In some embodiments, sensors may be positioned to calculate efficiencies of the individual stages. In the case of indirect efficiency calculation (calculation based on enthalpy lost in flue gas), flue gas temperatures at outlet of each stage and at least one oxygen measurement point for the entire HRSG may be used. In the case of direct efficiency calculation (calculation based on enthalpy transferred to steam channel, i.e. enthalpy difference between feedwater and steam), the parameters of feedwater (temperature, optionally pressure) and steam (temperature and pressure) together with steam (optionally feed water) mass flow may be provided by sensors.

FIG. 3 illustrates heat transfer in the HRSG units at 300. The heat is input at 310 to HRSG 146 and is transferred to steam 315. The remaining heat from HRSG 146 is indicated at 320, and is transferred to steam 325 in HRSG stage 147. Finally, the remaining heat 330 is lost in the stack. The output of each stage may be calculated from the input heat and the heat transferred to steam, which output may then serve as the heat input to a following stage. Steam produced at each stage may be used in a steam turbine, and may also be used e.g. for heating, in a chemical reaction etc; the topology of the plant steam flows can vary based on plant overall purpose, geographical position etc.

An example of heat distribution in a typical HRSG can be seen in FIG. 4, which represents inlet heat 400 being transferred to steam in both unit 146 and 147. Heat in steam for HRSG 146 is represented by flow 410. Heat in steam for HRSG 147 is indicated by flow 415. Stack heat loss is indicated by flow 420. The flows are represented by arrows, with a width of each arrow corresponding to the amount of heat in the flow. For an example inlet heat of 90.1 MW, flow 410 is 57.3%, flow 415 comprises 12.2%, and flow 420 comprises 30.5% or 27MW. The heat input and heat utilized at each stage may vary significantly in further embodiments. As seen in FIG. 1, even the stack heat is used to drive a further steam turbine 135 and generator 150.

According to the invention, HRSG heat input $Q_{in}$ is used for all stage models; thus, instead of partial efficiencies as previously used, coefficients $\alpha$ relating the stage heat output to this HRSG heat input are used

$$Q_{steam,HP} = \alpha_{HP}(Q_{in}, O_2) \cdot Q_{in} =: F_{\alpha,HP}(Q_{in}, O_2)$$

$$Q_{steam,MP} = \alpha_{MP}(Q_{in}, O_2) \cdot Q_{in} =: F_{\alpha,MP}(Q_{in}, O_2)$$

Coefficients $\alpha$ are typically obtained from data acquired during the steady state experiments on the real process. The model can be fine-tuned on-line, during the controller operation using a suitable adaptation mechanism.

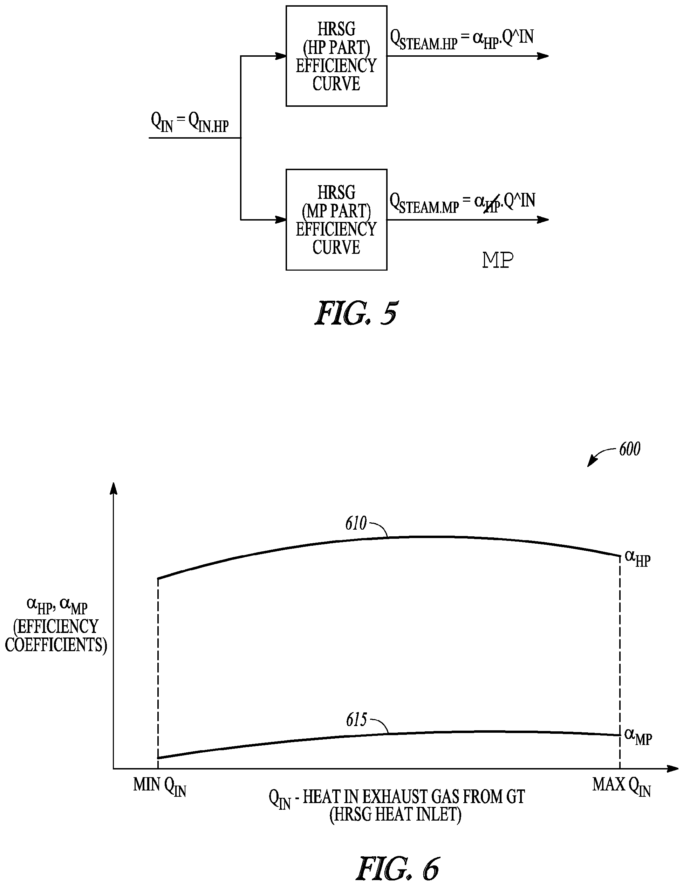

$O_2$ is the oxygen concentration in flue gas, which is an auxiliary parameter not subject to optimization in one embodiment. It simply parameterizes the model. The above representation does not need a stage coupling condition. It is a parallel form of the model as illustrated in FIG. 5. Each stage is treated separately even though physically they are concatenated. The relation between efficiencies $\eta$ and coefficients $\alpha$ are given by

$$\alpha_{HP}(Q_{in}, O_2) = \eta_{HP}\left(F_{\alpha,HP}(Q_{steam,HP}, O_2), O_2\right)$$

$$\alpha_{MP}(Q_{in}, O_2) = \eta_{MP}\left(F_{\alpha,HP}(Q_{steam,HP}, O_2), O_2\right) \times \left(1 - \eta_{HP}\left(F_{\alpha,HP}(Q_{steam,HP}, O_2), O_2\right)\right).$$

FIG. 6 is a graph 600 illustrating the efficiency models of HRSG stages 146 at 610 and 147 at 615 in the form of efficiency versus heat input flow. Minimum and maximum steam flows are illustrated as the same for each HRSG stage.

Note that for the first HRSG 146 stage, the alpha coefficient and the efficiency eta are fully equivalent. The prior cascade representation was usually used in single-stage boiler models. The reason was that the output steam flow (or its equivalent heat flow) was used as a decision variable in an optimization problem of Economic Load Allocation for multiple parallel boilers. It was advantageous, because the decision variables entered linearly in the balance equations, which is important for solving a nonlinear programming problem. In the case of HRSG, however, non-linear balance equations cannot be avoided and thus the prior representation with efficiencies parameterized by the output heat flow does not have this advantage any longer.

The parallel approach as suggested by the invention seems to be the better option, because it provides a common basis for both stages (heat inlet to HRSG), allowing parallel and independent calculation of model outputs; there is no uncertainty propagation to downstream stages. Moreover, it allows a physical interpretation of $\alpha$ coefficients and a straightforward examination of individual contributions of each stage to overall HRSG operation. Controller 170 may use the models to control the multiple stages of the heat steam generator to obtain desired efficiencies and power output. Models thus obtained are used in a steady-state optimizer of the overall process involving heat and power generation (as is, e.g., ELA, the Economic Load Allocation unit). Further, it can be used for obtaining a correct gain information for the linear model of the dynamic model-based predictive controller which stabilizes pressure in multiple steam headers. Efficiency curves in the parallel representation are illustrated at 610 and 615 in FIG. 6.

The parallel HRSG model is subject to changes. For example, changes may occur due to heat exchangers fouling and fluctuations of feed-water temperature. These changes and others can be captured by changing the shapes of functions $F_{\alpha,HP}$ and $F_{\alpha,MP}$. Most of the changes may be modeled as multiplicative perturbations

$$\hat{F}_{\alpha,HP}\left(Q_{in},O_2,\theta_{HP}\right) = \theta_{HP} \cdot F_{\alpha,HP}\left(Q_{in},O_2\right)$$

$$\hat{F}_{\alpha,MP}\left(Q_{in},O_2,\theta_{MP}\right) = \theta_{MP} \cdot F_{\alpha,MP}\left(Q_{in},O_2\right).$$

More complex shape variations can be considered, but the simple multiplicative one is adequate in most cases. The perturbation parameters $\theta_{HP}$ and $\theta_{mP}$ can be estimated on-line from process data, using a suitable recursive estimator with inequality bounds.

In one example, calculated models were tested on experimental process data from a combined cycle power plant consisting of several boilers, GTs and HRSGs. The models allow straightforward analysis of contribution of individual parts to overall HRSG efficiency pattern. The amount of heat transferred to steam in the HP and MP stages may be easily calculated and shown graphically. Similarly, heat lost in the stack may be easily calculated and shown graphically. Note that sum of all $\alpha$ coefficients in the whole HRSG (including stack heat loss) sums up to 1. Calculated models well represented real operation of the HRSG and can be directly used in the optimization engines, such as Honeywell ELA (Economic Load Allocation, part of the Honeywell Advanced Energy Solutions (AES) suite).

Parameter variations may be compensated by an adaptation mechanism. Model adaptation considers the following input-output balance equation

$$0 = \theta_1 \frac{dh_{HP}S_{HP}}{\alpha_{HP}\left(Q_{in}\right)} - Q_{in}$$

$$0 = \theta_2 \frac{dh_{MP}S_{MP}}{\alpha_{MP}\left(Q_{in}\right)} - Q_{in}$$

Where, $S_{HP}$ and $S_{MP}$ are mass flows of high and mid-pressure steam, respectively. Variables $dh_{HP}$ ($\Delta h_{HP}$) and $dh_{MP}$ ($\Delta h_{MP}$) denote enthalpy increase. Hence, heat passed to high pressure steam in the exchanger is given by

$$Q_{steam,HP} = dh_{HP}S_{HP}$$

Parameters $\theta_1$ and $\theta_2$ are for model adaptation to uncertainties from alpha-coefficient degradation (exchanger fouling), or to changes in feed-water temperature (perturbing enthalpy increase). Nominal value for these multiplicative parameters is thus equal to one.

An representation with partial efficiencies $\eta$ is considered as

$$0 = \theta_1 \frac{dh_{HP} S_{HP}}{\eta_{HP}(S_{HP})} - Q_{in}$$

$$0 = \theta_2 \frac{dh_{MP} S_{MP}}{\eta_{MP}(S_{MP})} - \left(Q_{in} - \theta_3 dh_{HP} S_{HP}\right)$$

$$0 = \theta_1 - \theta_3$$

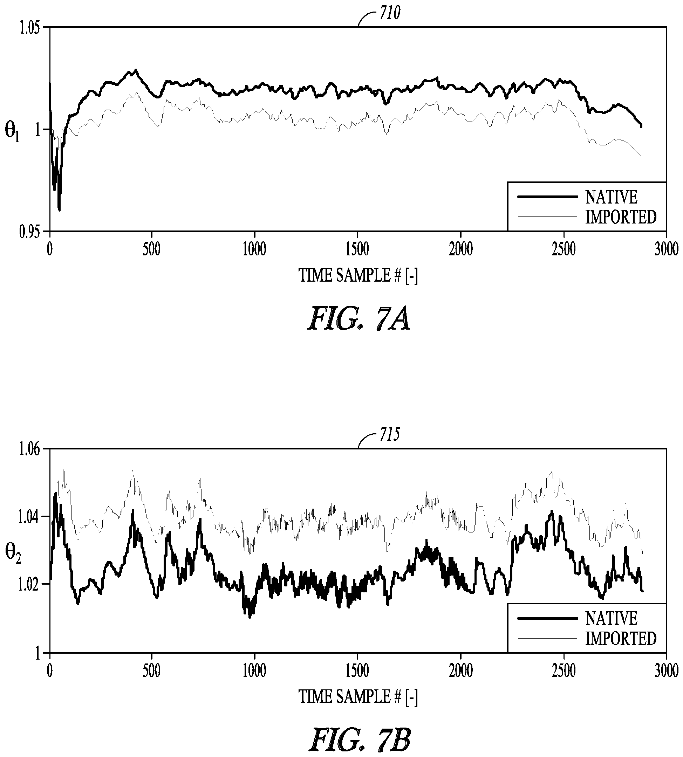

The variables are as above; parameter $\theta_3$ serves to enforce the coupling condition. Although parameters $\theta_1$ and $\theta_2$ are the same in both representations as illustrated in FIGs. 7A and 7B at 710 and 715 respectively, their estimated values from data may not be the same, as the formulation of the estimation problem is different. The parameters in representations 710 and 715 are estimated for the parallel representation (with alpha coefficients) and are labeled as 'native', where those for the prior cascade representation (with partial efficiencies eta) as 'imported'. It needs to be noted that alpha and eta parameters were obtained independently and their consistency is thus not guaranteed. In this case, the inconsistency is reflected in the parameter offset in FIGs. 7A and 7B.

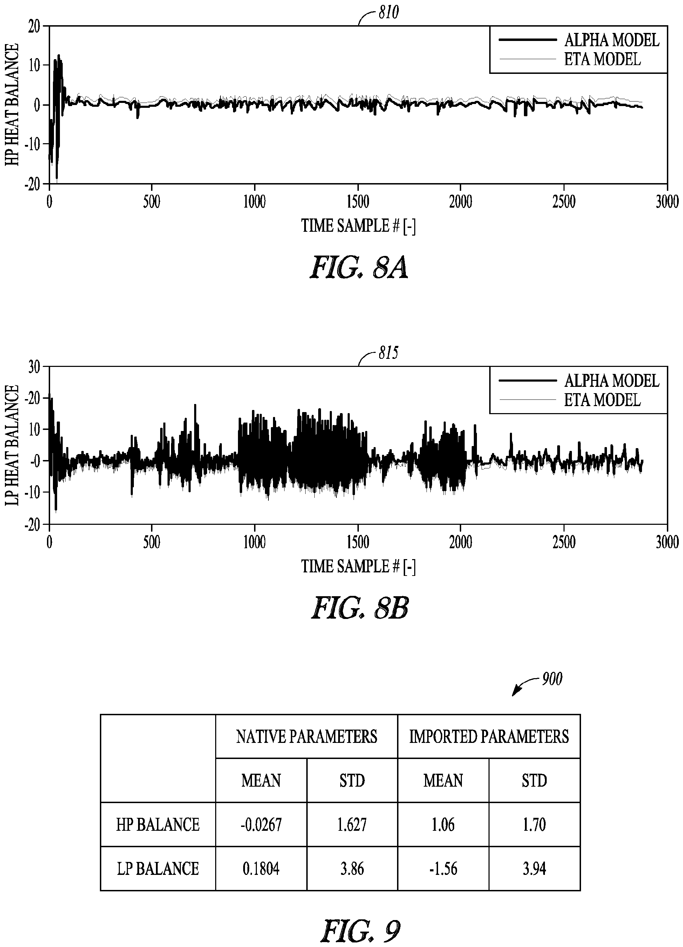

FIGs. 8A and 8B at 810 and 815 illustrate residuals of the parallel model for parameters estimated (alpha coefficients, 'native') and those fitted to the partial efficiencies model (efficiencies eta, 'imported' parameters). In the latter case the residuals have an offset, but are equivalent otherwise; this offset is due to the offset in parameters, caused by the inconsistency between the model representations.

A statistical evaluation of the residuals is in a table 900 in FIG. 9. It can be seen that the imported parameters indeed cause a biased estimate, but the variability is nearly the same. Table 900 illustrates mean and standard deviations for the residuals with rows comprising the HRSG stages and columns corresponding to native parameters and imported parameters. Mean and standard deviation are shown for each set of parameters.

Table 900 shows that the proposed parallel representation of HRSG is equivalent to the serial one. The benefit is its simplicity, enabling identifying and adapting the HRSG model as a set of independent SISO models.

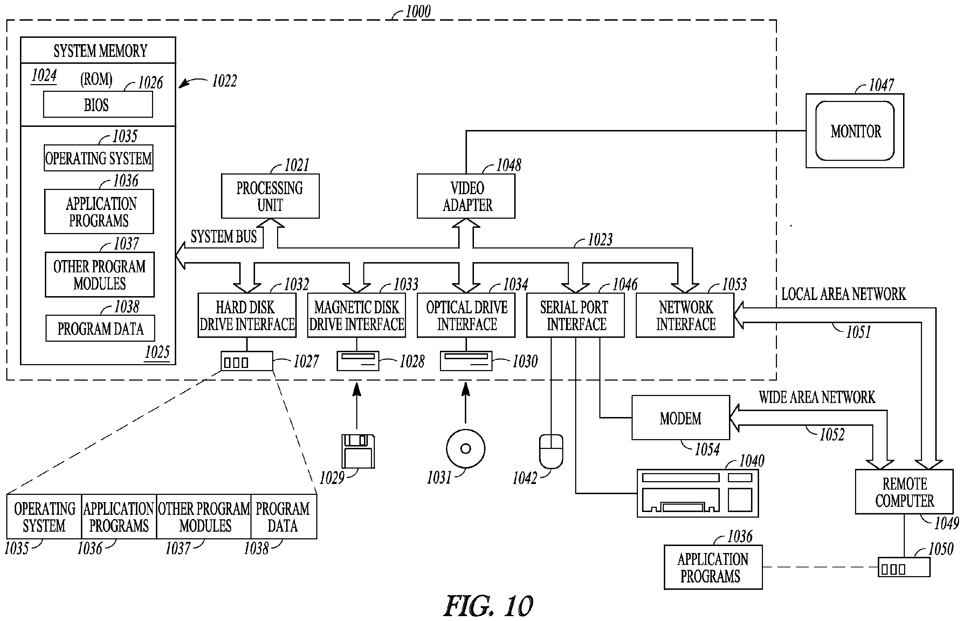

FIG. 10 is a block diagram of a computer system to implement methods and the controller, according to an example embodiment. In the embodiment shown in FIG. 10, a hardware and operating environment is provided that is applicable to any specifically programmed device capable of performing one or more of the methods and control functions described. Many components may be eliminated as they perform functions that may not be relevant to such methods and control functions in various embodiments. Much simpler micro controllers or other electronic processing device may be used in some embodiments.

As shown in FIG. 10, one embodiment of the hardware and operating environment includes a general purpose computing device in the form of a computer 1000 (e.g., a personal computer, workstation, or server), including one or more processing units 1021, a system memory 1022, and a system bus 1023 that operatively couples various system components including the system memory 1022 to the processing unit 1021. There may be only one or there may be more than one processing unit 1021, such that the processor of computer 1000 comprises a single central-processing unit (CPU), or a plurality of processing units, commonly referred to as a multiprocessor or parallel-processor environment. In various embodiments, computer 1000 is a conventional computer, a distributed computer, or any other type of computer.

The system bus 1023 can be any of several types of bus structures including a memory bus or memory controller, a peripheral bus, and a local bus using any of a variety of bus architectures. The system memory can also be referred to as simply the memory, and, in some embodiments, includes read-only memory (ROM) 1024 and random-access memory (RAM) 1025. A basic input/output system (BIOS) program 1026, containing the basic routines that help to transfer information between elements within the computer 1000, such as during start-up, may be stored in ROM 1024. The computer 1000 further includes a hard disk drive 1027 for reading from and writing to a hard disk, not shown, a magnetic disk drive 1028 for reading from or writing to a removable magnetic disk 1029, and an optical disk drive 1030 for reading from or writing to a removable optical disk 1031 such as a CD ROM or other optical media.

The hard disk drive 1027, magnetic disk drive 1028, and optical disk drive 1030 couple with a hard disk drive interface 1032, a magnetic disk drive interface 1033, and an optical disk drive interface 1034, respectively. The drives and their associated computer-readable media provide non volatile storage of computer-readable instructions, data structures, program modules and other data for the computer 1000. It should be appreciated by those skilled in the art

EP 2 884 059 B1

that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 1029, optical disk 1031, ROM 1024, or RAM 1025, including an operating system 1035, one or more application programs 1036, other program modules 1037, and program data 1038. Programming for implementing one or more processes or method described herein may be resident on any one or number of these computer-readable media.

A user may enter commands and information into computer 1000 through input devices such as a keyboard 1040 and pointing device 1042. Other input devices (not shown) can include a microphone, joystick, game pad, satellite dish, scanner, or the like. These other input devices are often connected to the processing unit 1021 through a serial port interface 1046 that is coupled to the system bus 1023, but can be connected by other interfaces, such as a parallel port, game port, or a universal serial bus (USB). A monitor 1047 or other type of display device can also be connected to the system bus 1023 via an interface, such as a video adapter 1048. The monitor 1047 can display a graphical user interface for the user. In addition to the monitor 1047, computers typically include other peripheral output devices (not shown), such as speakers and printers.

The computer 1000 may operate in a networked environment using logical connections to one or more remote computers or servers, such as remote computer 1049. These logical connections are achieved by a communication device coupled to or a part of the computer 1000; the invention is not limited to a particular type of communications device. The remote computer 1049 can be another computer, a server, a router, a network PC, a client, a peer device or other common network node, and typically includes many or all of the elements described above I/0 relative to the computer 1000, although only a memory storage device 1050 has been illustrated. The logical connections depicted in FIG. 10 include a local area network (LAN) 1051 and/or a wide area network (WAN) 1052. Such networking environments are commonplace in office networks, enterprise-wide computer networks, intranets and the internet, which are all types of networks.

When used in a LAN-networking environment, the computer 1000 is connected to the LAN 1051 through a network interface or adapter 1053, which is one type of communications device. In some embodiments, when used in a WAN-networking environment, the computer 1000 typically includes a modem 1054 (another type of communications device) or any other type of communications device, e.g., a wireless transceiver, for establishing communications over the wide-area network 1052, such as the internet. The modem 1054, which may be internal or external, is connected to the system bus 1023 via the serial port interface 1046. In a networked environment, program modules depicted relative to the computer 1000 can be stored in the remote memory storage device 1050 of remote computer, or server 1049. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A method comprising:

   receiving waste heat from a gas turbine (110);
   adding heat via duct firing;
   using the received waste heat and added heat via duct firing to create steam at multiple stages of a heat recovery steam generator (146, 147) comprising a first high pressure stage (146) and a second medium pressure stage (147), the stages being cascaded; and
   controlling the multiple stages of the heat recovery steam generator (146,147) utilizing parameters representative of heat input to each stage and parallel models for the high pressure stage (146) and the medium pressure stage (147);
   wherein the parallel models comprise:

$$Q_{steam,HP} \quad = \quad \alpha_{HP}(Q_{in}, O_2) \cdot Q_{in} \quad =: \quad F_{\alpha,HP}(Q_{in}, O_2)$$

$$Q_{steam,MP} \quad = \quad \alpha_{MP}(Q_{in}, O_2) \cdot Q_{in} \quad =: \quad F_{\alpha,MP}(Q_{in}, O_2)$$

where $O_2$ is oxygen concentration, $\alpha_{HP}$ and $\alpha_{MP}$ are efficiency coefficients, and $Q_{in}$ is input heat to the heat recovery steam generator (146, 147), and $Q_{steam,HP}$, $Q_{steam,MP}$ correspond to heat in steam for respective stages.

2. The method of claim 1, further comprising adapting the parallel models by including multiplicative factors to account for environmental changes.

3. The method of claim 2, wherein the multiplicative factors account for heat exchanger fouling and variations in feed-water temperature.

4. The method of claim 1, wherein relations between efficiencies η and efficiency coefficients $\alpha$ are given by

$$\alpha_{HP}(Q_{in}, O_2) \quad = \quad \eta_{HP}\left( F_{\alpha,HP}\left( Q_{steam,HP}, O_2 \right), O_2 \right)$$

$$\alpha_{MP}(Q_{in}, O_2) \quad = \quad \eta_{MP}\left( F_{\alpha,HP}\left( Q_{steam,HP}, O_2 \right), O_2 \right) \\ \times \left( 1 - \eta_{HP}\left( F_{\alpha,HP}\left( Q_{steam,HP}, O_2 \right), O_2 \right) \right).$$

the method further comprising modeling environmental changes as multiplicative perturbations by changing the shapes of functions $F_{\alpha, HP}$ and $F_{\alpha, MP}$ in accordance with:

$$\hat{F}_{\alpha,HP}\left( Q_{in}, O_2, \theta_{HP} \right) \quad = \quad \theta_{HP} \cdot F_{\alpha,HP}\left( Q_{in}, O_2 \right)$$

$$\hat{F}_{\alpha,MP}\left( Q_{in}, O_2, \theta_{MP} \right) \quad = \quad \theta_{MP} \cdot F_{\alpha,MP}\left( Q_{in}, O_2 \right).$$

where $F_{\alpha,HP}$ and $F_{\alpha,MP}$ are functions and $\theta_{HP}$ and $\theta_{mP}$ are perturbation parameters estimated from process data.

5. The method of claim 4, wherein $\theta_{HP}$ and $\theta_{mP}$ are estimated using a recursive estimator with inequality bounds.

6. A system comprising:

a duct (125) to receive waste heat;
a heat recovery steam generator (146, 147) to receive the waste heat and add heat via duct firing to create steam, the heat recovery steam generator (146, 147) having multiple stages comprising a first high pressure stage (146) and a second medium pressure stage (147), the stages being cascaded;
sensors (175) to sense heat parameters at an input to each of the multiple stages; and
a controller (17) to control the multiple stages of the heat recovery steam generator (146, 147) using the parameters representative of heat input to each stage and parallel models for the high pressure stage (146) and the medium pressure stage (147);
wherein the parallel models comprise:

$$Q_{steam,HP} \;=\; \alpha_{HP}(Q_{in}, O_2) \cdot Q_{in} \;=: \; F_{\alpha,HP}(Q_{in}, O_2)$$

$$Q_{steam,MP} \;=\; \alpha_{MP}(Q_{in}, O_2) \cdot Q_{in} \;=: \; F_{\alpha,MP}(Q_{in}, O_2)$$

where $O_2$ is oxygen concentration, $\alpha_{HP}$ and $\alpha_{MP}$ are efficiency coefficients, and $Q_{in}$ is input heat to the heat recovery steam generator (146, 147), and $Q_{steam,HP}$, $Q_{steam,MP}$ correspond to heat in steam for respective stages.

**7.** The system of claim 6, wherein relations between efficiencies $\eta$ and efficiency coefficients $\alpha$ are given by

$$\alpha_{HP}(Q_{in}, O_2) \;=\; \eta_{HP}\Big(F_{\alpha,HP}\big(Q_{steam,HP}, O_2\big), O_2\Big)$$

$$\alpha_{MP}(Q_{in}, O_2) \;=\; \eta_{MP}\Big(F_{\alpha,HP}\big(Q_{steam,HP}, O_2\big), O_2\Big)$$
$$\times\Big(1 - \eta_{HP}\big(F_{\alpha,HP}\big(Q_{steam,HP}, O_2\big), O_2\big)\Big).$$

and the controller (170) is adapted to model environmental changes as multiplicative perturbations by changing the shapes of functions $F_{\alpha, HP}$ and $F_{\alpha, MP}$ in accordance with:

$$\hat{F}_{\alpha,HP}\big(Q_{in}, O_2, \theta_{HP}\big) \;=\; \theta_{HP} \cdot F_{\alpha,HP}\big(Q_{in}, O_2\big)$$

$$\hat{F}_{\alpha,MP}\big(Q_{in}, O_2, \theta_{MP}\big) \;=\; \theta_{MP} \cdot F_{\alpha,MP}\big(Q_{in}, O_2\big).$$

where $F_{\alpha,HP}$ and $F_{\alpha,MP}$ are functions and $\theta_{HP}$ and $\theta_{mP}$ are perturbation parameters estimated from process data.

**8.** The system of claim 7, wherein $\theta_{HP}$ and $\theta_{mP}$ are estimated using a recursive estimator with inequality bounds.

**9.** The system of claim 7, wherein the multiplicative perturbations account for heat exchanger fouling and variations in feed-water temperature.

**10.** A computer readable storage device having code to cause a controller (170) to control the multiple stages of a heat recovery steam generator (146, 147) comprising a first high pressure stage (146) and a second medium pressure stage (147), the stages being cascaded, and the heat recovery steam generator (146, 147) being adapted to receive waste heat from a gas turbine (110) and to add heat via duct firing to create steam; the code comprising:

code to cause the controller (170) to control the multiple stages of the heat recovery steam generator (146,147) utilizing parameters representative of heat input to each stage and parallel models for the high pressure stage (146) and the medium pressure stage (147);
wherein the parallel models comprise:

$$Q_{steam,HP} \;=\; \alpha_{HP}(Q_{in}, O_2) \cdot Q_{in} \;=: \; F_{\alpha,HP}(Q_{in}, O_2)$$

$$Q_{steam,MP} = \alpha_{MP}(Q_{in}, O_2) \cdot Q_{in} =: F_{\alpha,MP}(Q_{in}, O_2)$$

where $O_2$ is oxygen concentration, $\alpha_{HP}$ and $\alpha_{MP}$ are efficiency coefficients, and $Q_{in}$ is input heat to the heat recovery steam generator (146, 147), and $Q_{steam,HP}$, $Q_{steam,MP}$ correspond to heat in steam for respective stages.

11. The computer readable storage device of claim 10, wherein relations between efficiencies $\eta$ and efficiency coefficients $\alpha$ are given by

$$\alpha_{HP}(Q_{in}, O_2) = \eta_{HP}\left(F_{\alpha,HP}\left(Q_{steam,HP}, O_2\right), O_2\right)$$

$$\alpha_{MP}(Q_{in}, O_2) = \eta_{MP}\left(F_{\alpha,HP}\left(Q_{steam,HP}, O_2\right), O_2\right) \times \left(1 - \eta_{HP}\left(F_{\alpha,HP}\left(Q_{steam,HP}, O_2\right), O_2\right)\right).$$

and the code includes code to cause the controller (170) to model environmental changes as multiplicative perturbations by changing the shapes of functions $F_{\alpha,\,HP}$ and $F_{\alpha,\,MP}$ in accordance with:

$$\hat{F}_{\alpha,HP}(Q_{in}, O_2, \theta_{HP}) = \theta_{HP} \cdot F_{\alpha,HP}(Q_{in}, O_2)$$

$$\hat{F}_{\alpha,MP}(Q_{in}, O_2, \theta_{MP}) = \theta_{MP} \cdot F_{\alpha,MP}(Q_{in}, O_2).$$

where $F_{\alpha,HP}$ and $F_{\alpha,MP}$ are functions and $\theta_{HP}$ and $\theta_{mP}$ are perturbation parameters estimated from process data.

**Patentansprüche**

1. Verfahren, umfassend:

Empfangen einer Abwärme von einer Gasturbine (110) ;
Hinzufügen von Wärme durch eine Schachtfeuerung;
Verwenden der empfangenen Abwärme und der durch die Schachtfeuerung hinzugefügten Wärme, um Dampf auf mehreren Stufen eines Wärmerückgewinnungsdampferzeugers (146, 147) zu erzeugen, der eine erste Hochdruckstufe (146) und eine zweite Mitteldruckstufe (147) umfasst, wobei die Stufen kaskadiert sind; und Steuern der mehreren Stufen des Wärmerückgewinnungsdampferzeugers (146, 147) mithilfe von Parametern, welche die Wärmeeingabe in jede Stufe repräsentieren, und mithilfe von parallelen Modellen für die Hochdruckstufe (146) und die Mitteldruckstufe (147);
wobei die parallelen Modelle umfassen:

$$Q_{steam,HP} = \alpha_{HP}(Q_{in}, O_2) \cdot Q_{in} =: F_{\alpha,HP}(Q_{in}, O_2)$$

$$Q_{steam,MP} = \alpha_{MP}(Q_{in}, O_2) \cdot Q_{in} =: F_{\alpha,MP}(Q_{in}, O_2)$$

wobei $O_2$ eine Sauerstoffkonzentration ist, $\alpha_{HP}$ und $\alpha_{MP}$ Wirkungsgradkoeffizienten sind, und $Q_{in}$ eine Eingangswärme in den Wärmerückgewinnungsdampferzeuger (146, 147) ist, und $Q_{steam, HP}$ und $Q_{steam, MP}$ der Dampfwärme für die jeweiligen Stufen entsprechen.

2.  Verfahren nach Anspruch 1, das außerdem ein Anpassen der parallelen Modelle umfasst, indem multiplikative Faktoren aufgenommen werden, um Umgebungsänderungen zu berücksichtigen.

3.  Verfahren nach Anspruch 2, wobei die multiplikativen Faktoren einen Wärmeübertragerausfall und Variationen bei der Speisewassertemperatur berücksichtigen.

4.  Verfahren nach Anspruch 1, wobei die Beziehungen zwischen den Wirkungsgraden $\eta$ und den Wirkungsgradkoeffizienten $\alpha$ gegeben sind durch:

$$\alpha_{HP} \ (Q_{in}, \ O_2) \ = \ \eta_{HP} \ (F_{\alpha,HP} \ (Q_{steam,HP}, \ O_2), \ O_2)$$

$$\alpha_{MP} \ (Q_{in}, \ O_2) \ = \ \eta_{MP} \ (F_{\alpha,HP} \ (Q_{steam,HP}, \ O_2), \ O_2)$$

$$x \ (1 \ - \ \eta_{HP} \ (F_{\alpha,HP} \ (Q_{steam,HP}, \ O_2), \ O_2))$$

und wobei das Verfahren ferner umfasst, die Umgebungsänderungen als multiplikative Störungen zu modellieren, indem die Form der Funktionen $F_{\alpha,HP}$ und $F_{\alpha,MP}$ verändert wird gemäß:

$$\hat{F}_{\alpha,HP} \ (Q_{in}, \ O_2, \ \Theta_{HP}) = \Theta_{HP} \cdot F_{\alpha,HP} \ (Q_{in}, \ O_2)$$

$$\hat{F}_{\alpha,MP} \ (Q_{in}, \ O_2, \ \Theta_{MP}) = \Theta_{MP} \cdot F_{\alpha,MP} \ (Q_{in}, \ O_2)$$

wobei $F_{\alpha,HP}$ und $F_{\alpha,MP}$ Funktionen sind und $\Theta_{HP}$ und $\Theta_{MP}$ Störungsparameter sind, die aus den Prozessdaten geschätzt werden.

5.  Verfahren nach Anspruch 4, wobei $\Theta_{HP}$ und $\Theta_{HP}$ mithilfe einer rekursiven Schätzeinheit mit Ungleichungsgrenzen geschätzt werden.

6.  System, umfassend:

einen Schacht (125), um Abwärme zu empfangen;
einen Wärmerückgewinnungsdampferzeuger (146, 147), um die Abwärme zu empfangen und Wärme durch eine Schachtfeuerung hinzuzufügen, um Dampf zu erzeugen, wobei der Wärmerückgewinnungsdampferzeuger Verwenden der empfangenen Abwärme (146, 147) mehrere Stufen umfasst, die eine erste Hochdruckstufe (146) und eine zweite Mitteldruckstufe (147) umfassen, wobei die Stufen kaskadiert sind;
Sensoren (175), um Wärmeparameter an einem Eingang zu jeder der mehreren Stufen zu erfassen; und
eine Steuereinheit (17), um die mehreren Stufen des Wärmerückgewinnungsdampferzeugers (146, 147) mithilfe der Parameter, die eine Wärmeeingabe in jede Stufe repräsentieren, und mithilfe paralleler Modelle für die Hochdruckstufe (146) und die Mitteldruckstufe (147) zu steuern;
wobei die parallelen Modelle umfassen:

$$Q_{steam,HP} \ = \ \alpha_{HP} \ (Q_{in}, \ O_2) \ \cdot \ Q_{in} \ =: \ F_{\alpha,HP} \ (Q_{in}, \ O_2)$$

$$Q_{steam,MP} \ = \ \alpha_{MP} \ (Q_{in}, \ O_2) \ \cdot \ Q_{in} \ =: \ F_{\alpha,MP} \ (Q_{in}, \ O_2)$$

wobei $O_2$ eine Sauerstoffkonzentration ist, $\alpha_{HP}$ und $\alpha_{MP}$ Wirkungsgradkoeffizienten sind, und $Q_{in}$ eine Eingangswärme in den Wärmerückgewinnungsdampferzeuger (146, 147) ist, und $Q_{steam, HP}$ und $Q_{steam, MP}$ der Dampfwärme für die jeweiligen Stufen entsprechen.

7. System nach Anspruch 6, wobei die Beziehungen zwischen den Wirkungsgraden $\eta$ und den Wirkungsgradkoeffizienten $\alpha$ gegeben sind durch::

$$\alpha_{HP} \ (Q_{in}, \ O_2) \ = \ \eta_{HP} \ (F_{\alpha,HP} \ (Q_{steam,HP}, \ O_2), \ O_2)$$

$$\alpha_{MP} \ (Q_{in}, \ O_2) \ = \ \eta_{MP} \ (F_{\alpha,HP} \ (Q_{steam,HP}, \ O_2), \ O_2)$$
$$\times \ (1 \ - \ \eta_{HP} \ (F_{\alpha,HP} \ (Q_{steam,HP}, \ O_2),$$
$$O_2))$$

und wobei die Steuereinheit (170) geeignet ist, die Umgebungsänderungen als multiplikative Störungen zu modellieren, indem die Form der Funktionen $F_{\alpha,HP}$ und $F_{\alpha,MP}$ verändert wird gemäß:

$$\hat{F}_{\alpha,HP} \ (Q_{in}, \ O_2, \ \Theta_{HP}) = \Theta_{HP} \cdot F_{\alpha,HP} \ (Q_{in}, \ O_2)$$

$$\hat{F}_{\alpha,MP} \ (Q_{in}, \ O_2, \ \Theta_{MP}) = \Theta_{MP} \cdot F_{\alpha,MP} \ (Q_{in}, \ O_2)$$

wobei $F_{\alpha,HP}$ und $F_{\alpha,MP}$ Funktionen sind und $\Theta_{HP}$ und $\Theta_{MP}$ Störungsparameter sind, die aus den Prozessdaten geschätzt werden.

8. System nach Anspruch 7, wobei $\Theta_{HP}$ und $\Theta_{MP}$ mithilfe einer rekursiven Schätzeinheit mit Ungleichungsgrenzen geschätzt werden.

9. System nach Anspruch 7, wobei die multiplikativen Faktoren einen Wärmeübertragerausfall und Variationen bei der Speisewassertemperatur berücksichtigen.

10. Computerlesbare Speichervorrichtung, die einen Code aufweist, der eine Speichereinheit (170) veranlasst, die mehreren Stufen eines Wärmerückgewinnungsdampferzeugers (146, 147) zu steuern, die eine erste Hochdruckstufe (146) und eine zweite Mitteldruckstufe (147) umfassen, wobei die Stufen kaskadiert sind, und wobei der Wärmerückgewinnungsdampferzeuger (146, 147) geeignet ist, um Abwärme von einer Gasturbine (110) zu empfangen und Wärme durch eine Schachtfeuerung hinzuzufügen, um Dampf zu erzeugen, wobei der Code umfasst:

einen Code, der die Steuereinheit (170) veranlasst, die mehreren Stufen des Wärmerückgewinnungsdampferzeugers (146, 147) mithilfe von Parametern, die eine Wärmeeingabe in jede Stufe repräsentieren, und mithilfe paralleler Modelle für die Hochdruckstufe (146) und die Mitteldruckstufe (147) zu steuern;
wobei die parallelen Modelle umfassen:

$$Q_{steam,HP} \ = \ \alpha_{HP} \ (Q_{in}, \ O_2) \ \cdot \ Q_{in} \ =: \ F_{\alpha,HP} \ (Q_{in}, \ O_2)$$

$$Q_{steam,MP} \ = \ \alpha_{MP} \ (Q_{in}, \ O_2) \ \cdot \ Q_{in} \ =: \ F_{\alpha,MP} \ (Q_{in}, \ O_2)$$

wobei $O_2$ eine Sauerstoffkonzentration ist, $\alpha_{HP}$ und $\alpha_{MP}$ Wirkungsgradkoeffizienten sind, und $Q_{in}$ eine Eingangswärme in den Wärmerückgewinnungsdampferzeuger (146, 147) ist, und $Q_{steam,HP}$ und $Q_{steam,MP}$ der Dampfwärme für die jeweiligen Stufen entsprechen.

11. Computerlesbare Speichervorrichtung nach Anspruch 10, wobei die Beziehungen zwischen den Wirkungsgraden $\eta$ und den Wirkungsgradkoeffizienten $\alpha$ gegeben sind durch:

$$\alpha_{HP} \ (Q_{in}, \ O_2) \ = \ \eta_{HP} \ (F_{\alpha,HP} \ (Q_{steam,HP}, \ O_2), \ O_2)$$

$$\alpha_{MP} \ (Q_{in}, \ O_2) \ = \ \eta_{MP} \ (F_{\alpha,HP} \ (Q_{steam,HP}, \ O_2), \ O_2)$$

$$x \ (1 \ - \ \eta_{HP} \ (F_{\alpha,HP} \ (Q_{steam,HP}, \ O_2), \ O_2))$$

und wobei der Code einen Code umfasst, der die Steuereinheit (170) veranlasst, Umgebungsänderungen als multiplikative Störungen zu modellieren, indem die Form der Funktionen $F_{\alpha,HP}$ und $F_{\alpha,MP}$ verändert wird gemäß:

$$\hat{F}_{\alpha,HP} \ (Q_{in}, \ O_2, \ \Theta_{HP}) = \Theta_{HP} \cdot F_{\alpha,HP} \ (Q_{in}, \ O_2)$$

$$\hat{F}_{\alpha,MP} \ (Q_{in}, \ O_2, \ \Theta_{MP}) = \Theta_{MP} \cdot F_{\alpha,MP} \ (Q_{in}, \ O_2)$$

wobei $F_{\alpha,HP}$ und $F_{\alpha,MP}$ Funktionen sind und $\Theta_{HP}$ und $\Theta_{MP}$ Störungsparameter sind, die aus den Prozessdaten geschätzt werden.

**Revendications**

1. Procédé comprenant les étapes suivantes :

recevoir de la chaleur perdue provenant d'une turbine à gaz (110) ;
ajouter de la chaleur par combustion supplémentaire ;
utiliser la chaleur perdue reçue et la chaleur ajoutée par combustion supplémentaire pour créer de la vapeur à de multiples étages d'un générateur de vapeur à récupération de chaleur (146, 147) comprenant un premier étage à haute pression (146) et un deuxième étage à moyenne pression (147), les étages étant disposés en cascade ; et
contrôler les multiples étages du générateur de vapeur à récupération de chaleur (146, 147) en utilisant des paramètres représentatifs de l'apport de chaleur à chaque étage et des modèles parallèles pour l'étage à haute pression (146) et l'étage à moyenne pression (147) ;
les modèles parallèles comprenant :

$$Q_{vapeur,HP} \ = \ \alpha_{HP} \ (Q_{in}, O_2) \cdot Q_{in} \ =: \ F\alpha,HP \ (Q_{in}, O_2)$$

$$Q_{vapeur,MP} \ = \ \alpha_{MP} \ (Q_{in}, O_2) \cdot Q_{in} \ =: \ F\alpha,MP \ (Q_{in}, O_2)$$

où $O_2$ est la concentration d'oxygène, $\alpha_{HP}$ et $\alpha_{MP}$ sont des coefficients d'efficacité, et $Q_{in}$ est la chaleur apportée au générateur de vapeur à récupération de chaleur (146, 147), et $Q_{vapeur,HP}$, $Q_{vapeur,MP}$ correspondent à la chaleur dans la vapeur pour les étages respectifs.

2. Procédé de la revendication 1, comprenant en outre l'étape consistant à adapter les modèles parallèles en incorporant des facteurs multiplicatifs pour tenir compte des changements environnementaux.

3. Procédé de la revendication 2, dans lequel les facteurs multiplicatifs tiennent compte de l'encrassement de l'échangeur de chaleur et des variations de la température de l'eau d'alimentation.

4. Procédé de la revendication 1, dans lequel les relations entre les efficacités η et les coefficients d'efficacité α sont données par

$$\alpha_{HP}(Q_{in}, O_2) = \eta_{HP}(F_{\alpha,HP}(Q_{vapeur,HP}, O_2), O_2)$$

$$\alpha_{MP}(Q_{in}, O_2) = \eta_{MP}(F_{\alpha,HP}(Q_{vapeur,HP}, O_2), O_2)$$
$$\times (1 - \eta_{HP}(F_{\alpha,HP}(Q_{vapeur,HP}, O_2), O_2)),$$

le procédé comprenant en outre l'étape consistant à modéliser les changements environnementaux comme des perturbations multiplicatives en changeant les formes des fonctions $F_{\alpha,HP}$ et $F_{\alpha,MP}$ conformément à :

$$\hat{F}_{\alpha,HP}(Q_{in}, O_2, \theta_{HP}) = \theta_{HP} \cdot F_{\alpha,HP}(Q_{in}, O_2)$$

$$\hat{F}_{\alpha,MP}(Q_{in}, O_2, \theta_{MP}) = \theta_{MP} \cdot F_{\alpha,MP}(Q_{in}, O_2)$$

où $F_{\alpha,HP}$ et $F_{\alpha,MP}$ sont des fonctions et $\theta_{HP}$ et $\theta_{MP}$ sont des paramètres de perturbation estimés à partir de données de procédé.

5. Procédé de la revendication 4, dans lequel $\theta_{HP}$ et $\theta_{MP}$ sont estimés en utilisant un estimateur récursif avec des limites d'inégalité.

6. Système comprenant :

une conduite (125) pour recevoir de la chaleur perdue ;
un générateur de vapeur à récupération de chaleur (146, 147) pour recevoir la chaleur perdue et ajouter de la chaleur par combustion supplémentaire pour créer de la vapeur, le générateur de vapeur à récupération de chaleur (146, 147) ayant de multiples étages comprenant un premier étage à haute pression (146) et un deuxième étage à moyenne pression (147), les étages étant disposés en cascade ;
des capteurs (175) pour détecter des paramètres thermiques à une entrée de chacun des multiples étages ; et
un contrôleur (17) pour contrôler les multiples étages du générateur de vapeur à récupération de chaleur (146, 147) en utilisant les paramètres représentatifs de la chaleur apportée à chaque étage et des modèles parallèles pour l'étage à haute pression (146) et l'étage à moyenne pression (147) ;
les modèles parallèles comprenant :

$$Q_{vapeur,HP} = \alpha_{HP}(Q_{in}, O_2) \cdot Q_{in} =: F_{\alpha,HP}(Q_{in}, O_2)$$

$$Q_{vapeur,MP} = \alpha_{MP}(Q_{in}, O_2) \cdot Q_{in} =: F_{\alpha,MP}(Q_{in}, O_2)$$

où $O_2$ est la concentration d'oxygène, $\alpha_{HP}$ et $\alpha_{MP}$ sont des coefficients d'efficacité, et $Q_{in}$ est la chaleur apportée au générateur de vapeur à récupération de chaleur (146, 147), et $Q_{vapeur,HP}$, $Q_{vapeur,MP}$ correspondent à la chaleur dans la vapeur pour les étages respectifs.

7. Système de la revendication 6, dans lequel les relations entre les efficacités η et les coefficients d'efficacité α sont données par

$$\alpha_{HP}(Q_{in}, O_2) = \eta_{HP}(F_{\alpha,HP}(Q_{vapeur,HP}, O_2), O_2)$$

$$\alpha_{MP}(Q_{in}, O_2) = \eta_{MP}(F_{\alpha,HP}(Q_{vapeur,HP}, O_2), O_2)$$
$$\times (1 - \eta_{HP}(F_{\alpha,HP}(Q_{vapeur,HP}, O_2), O_2)),$$

et le contrôleur (170) est adapté pour modéliser les changements environnementaux comme des perturbations multiplicatives en changeant les formes des fonctions $F_{\alpha,HP}$ et $F_{\alpha,MP}$ conformément à :

$$\hat{F}_{\alpha,HP}(Q_{in}, O_2, \theta_{HP}) = \theta_{HP} \cdot F_{\alpha,HP}(Q_{in}, O_2)$$

$$\hat{F}_{\alpha,MP}(Q_{in}, O_2, \theta_{MP}) = \theta_{MP} \cdot F_{\alpha,MP}(Q_{in}, O_2)$$

où $F_{\alpha,HP}$ et $F_{\alpha,MP}$ sont des fonctions et $\theta_{HP}$ et $\theta_{MP}$ sont des paramètres de perturbation estimés à partir de données de procédé.

8.  Système de la revendication 7, dans lequel $\theta_{HP}$ et $\theta_{MP}$ sont estimés en utilisant un estimateur récursif avec des limites d'inégalité.

9.  Système de la revendication 7, dans lequel les perturbations multiplicatives tiennent compte de l'encrassement de l'échangeur de chaleur et des variations de la température de l'eau d'alimentation.

10. Dispositif de stockage lisible par ordinateur ayant un code pour amener un contrôleur (170) à contrôler les multiples étages d'un générateur de vapeur à récupération de chaleur (146, 147) comprenant un premier étage à haute pression (146) et un deuxième étage à moyenne pression (147), les étages étant disposés en cascade, et le générateur de vapeur à récupération de chaleur (146, 147) étant adapté pour recevoir de la chaleur perdue provenant d'une turbine à gaz (110) et pour ajouter de la chaleur par combustion supplémentaire pour créer de la vapeur ; le code comprenant :

    un code pour amener le contrôleur (170) à contrôler les multiples étages du générateur de vapeur à récupération de chaleur (146, 147) en utilisant des paramètres représentatifs de la chaleur apportée à chaque étage et des modèles parallèles pour l'étage à haute pression (146) et l'étage à moyenne pression (147) ;
    les modèles parallèles comprenant :

$$Q_{vapeur,HP} = \alpha_{HP}(Q_{in}, O_2) \cdot Q_{in} =: F_{\alpha,HP}(Q_{in}, O_2)$$

$$Q_{vapeur,MP} = \alpha_{MP}(Q_{in}, O_2) \cdot Q_{in} =: F_{\alpha,MP}(Q_{in}, O_2)$$

où $O_2$ est la concentration d'oxygène, $\alpha_{HP}$ et $\alpha_{MP}$ sont des coefficients d'efficacité, et $Q_{in}$ est la chaleur apportée au générateur de vapeur à récupération de chaleur (146, 147), et $Q_{vapeur,HP}$, $Q_{vapeur,MP}$ correspondent à la chaleur dans la vapeur pour les étages respectifs.

11. Dispositif de stockage lisible par ordinateur de la revendication 10, dans lequel les relations entre les efficacités $\eta$ et les coefficients d'efficacité $\alpha$ sont données par

$$\alpha_{HP}(Q_{in}, O_2) = \eta_{HP}(F_{\alpha,HP}(Q_{vapeur,HP}, O_2), O_2)$$

$$\alpha_{MP}(Q_{in}, O_2) = \eta_{MP}(F_{\alpha,HP}(Q_{vapeur,HP}, O_2), O_2)$$
$$\times (1 - \eta_{HP}(F_{\alpha,HP}(Q_{vapeur,HP}, O_2), O_2))$$

et le code comporte un code pour amener le contrôleur (170) à modéliser les changements environnementaux comme des perturbations multiplicatives en changeant les formes des fonctions $F_{\alpha,HP}$ et $F_{\alpha,MP}$ conformément à :

$$\hat{F}_{\alpha,HP}(Q_{in}, O_2, \theta_{HP}) = \theta_{HP} \cdot F_{\alpha,HP}(Q_{in}, O_2)$$

$$\hat{F}_{\alpha,MP}(Q_{in}, O_2, \theta_{MP}) = \theta_{MP} \cdot F_{\alpha,MP}(Q_{in}, O_2)$$

où $F_{\alpha,HP}$ et $F_{\alpha,MP}$ sont des fonctions et $\theta_{HP}$ et $\theta_{MP}$ sont des paramètres de perturbation estimés à partir de données de procédé.

$$\hat{F}_{\alpha,MP}(Q_{in}, O_2, \theta_{MP}) = \theta_{MP} \cdot F_{\alpha,MP}(Q_{in}, O_2)$$

**FIG. 1**

FLUE
GAS

140 — ‾       146 — ‾       147 — ‾       — 220

210 — |      212 — |

EXHAUST GAS
(FROM GT & DF)

HRSG
(HP PART)

HRSG
(MP PART)     | — 214

145 —

*FIG. 2*

— 300

146 — ‾            147 — ‾

$Q_{IN} = Q_{IN, HP}$     HRSG    $Q_{IN, MP}$     HRSG    $Q_{STACK}$

310 —    (HP PART)    320 —    (MP PART)    330 —

315 — $Q_{STEAM, HP}$      325 — $Q_{STEAM, HP}$

MP

*FIG. 3*

HEAT IN
MP STREAM
57.3 [%]

410 —

HEAT IN
MP STREAM
12.2 [%]

400

415 —

HEAT INLET
TO HRSG
90.1 [MW]

STACK
HEAT LOSS
27 [MW] 30.5 [%]

420 —

*FIG. 4*

HRSG
(HP PART)
EFFICIENCY
CURVE

$Q_{STEAM.HP} = \alpha_{HP}.Q^{\wedge}IN$

$Q_{IN} = Q_{IN.HP}$

HRSG
(MP PART)
EFFICIENCY
CURVE

$Q_{STEAM.MP} = \alpha_{HP}.Q^{\wedge}IN$

MP

## FIG. 5

600

610

$\alpha_{HP}$

$\alpha_{HP}, \alpha_{MP}$
(EFFICIENCY
COEFFICIENTS)

615

$\alpha_{MP}$

MIN $Q_{IN}$

$Q_{IN}$ - HEAT IN EXHAUST GAS FROM GT
(HRSG HEAT INLET)

MAX $Q_{IN}$

## FIG. 6

FIG. 7A

FIG. 7B

FIG. 8A

FIG. 8B

| | NATIVE PARAMETERS | | IMPORTED PARAMETERS | |
|---|---|---|---|---|
| | MEAN | STD | MEAN | STD |
| HP BALANCE | -0.0267 | 1.627 | 1.06 | 1.70 |
| LP BALANCE | 0.1804 | 3.86 | -1.56 | 3.94 |

FIG. 9

*FIG. 10*

EP 2 884 059 B1

**EP 2 884 059 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2034137 A